# EUROPEAN PATENT APPLICATION

(11) **EP 4 723 584 A1**
(43) Date of publication of application: **08.04.2026**
(21) Application number: 25184238.1
(22) Date of filing: 20.06.2025
(51) Int. Cl.: H04L 45/24, H04L 45/00, H04L 45/74, H04L 47/125

(54) **SYSTEMS AND METHODS FOR LOAD-BALANCING TRAFFIC BASED ON FLOW ATTRIBUTES AND INTENTS**

(30) Priority: 02.10.2024 US 202418904877
(71) Applicant: Juniper Networks, Inc., Sunnyvale, CA 94089-1206 (US)
(72) Inventor: PALANISAMY, Balaji, Sunnyvale, 94089 (US); PATIL, Avinash, Sunnyvale, 94089 (US); KUMAR, Suraj, Sunnyvale, 94089 (US)
(74) Representative: D Young & Co LLP

(57) **Abstract**

A system for load-balancing traffic based on flow attributes and intents may include at least one storage device and/or circuitry. In this example, the storage device may be configured to store data that identifies a set of load-balancing options available for network traffic. Additionally or alternatively, the circuitry may be configured to (1) identify a set of attributes of a packet corresponding to a traffic flow, (2) determine, based at least in part on the set of attributes, an intent of the traffic flow, and (3) assign a load-balancing option included in the set of load-balancing options to the traffic flow based at least in part on the intent and the set of attributes. Various other devices, systems, and methods are also disclosed.

## Description

### BACKGROUND

Network devices (such as routers and switches) are often used to forward traffic within a network and/or across networks. These network devices may collectively represent and/or form certain paths through such networks. In some examples, a network may include and/or represent various paths that lead from a certain network device to a single destination. In one example, two or more of these paths may all constitute and/or represent the best routes and/or options for forwarding traffic from that network device to the single destination. Such paths may be referred to as equal-cost multipaths (ECMPs).

Some load-balanced networks may run and/or implement artificial intelligence (Al) routing technologies. In some examples, such load-balanced networks may train an Al routing technology based at least in part on traffic exchanged between computing devices. In one example, the traffic may involve flows with different attributes and/or intents. Unfortunately, some load-balanced networks may apply the same load-balancing techniques to such traffic flows irrespective of their different attributes and/or intents, potentially leading to sub-optimal performance (e.g., job completion times) and/or sub-optimal resource utilization (e.g., link bandwidth).

### SUMMARY

Particular aspects are set out in the appended independent claims. Various optional embodiments are set out in the dependent claims.

The presently taught approaches, from at least some perspectives, provide additional and improved systems and methods for load-balancing traffic based on flow attributes and intents.

As will be described in greater detail below, the instant disclosure generally relates to systems and methods for load-balancing traffic based on flow attributes and intents. In one example, a system for accomplishing such a task may include at least one storage device and/or circuitry. In this example, the storage device may be configured to store data that identifies a set of load-balancing options available for network traffic. Additionally or alternatively, the circuitry may be configured to (1) identify a set of attributes of a packet corresponding to a traffic flow, (2) determine, based at least in part on the set of attributes, an intent of the traffic flow, and (3) assign a load-balancing option included in the set of load-balancing options to the traffic flow based at least in part on the intent and the set of attributes.

Similarly, a corresponding method may involve (1) receiving, by circuitry included in a network device, a packet corresponding to a traffic flow, (2) identifying, by the circuitry, a set of attributes of a packet corresponding to a traffic flow, (3) determining, by the circuitry, an intent of the traffic flow based at least in part on the set of attributes, and (4) assigning, by the circuitry, a load-balancing option included in the set of load-balancing options to the traffic flow based at least in part on the intent and the set of attributes.

A corresponding computer-readable medium may include (e.g. store and/or convey) one or more computer-executable instructions. When executed by at least one hardware processor of a computing device, the computer-executable instructions may cause the hardware processor to (1) receive a packet corresponding to a traffic flow, (2) identify a set of attributes of a packet corresponding to a traffic flow, (3) determine an intent of the traffic flow based at least in part on the set of attributes, and (4) assign a load-balancing option included in the set of load-balancing options to the traffic flow based at least in part on the intent and the set of attributes.

Features from any of the above-mentioned embodiments may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of example embodiments and are a part of the specification. Together with the following description, these drawings demonstrate and explain various principles of the instant disclosure.
FIG. 1 is an illustration of an example system for load-balancing traffic based on flow attributes and intents in accordance with one or more embodiments of this disclosure.
FIG. 2 is an illustration of an example system for load-balancing traffic based on flow attributes and intents in accordance with one or more embodiments of this disclosure.
FIG. 3 is an illustration of an example implementation of load-balancing traffic based on flow attributes and intents in accordance with one or more embodiments of this disclosure.
FIG. 4 is an illustration of an example packet that exhibits certain attributes indicative of the corresponding traffic flow in accordance with one or more embodiments of this disclosure.
FIG. 5 is a flow diagram of an example method for load-balancing traffic based on flow attributes and intents in accordance with one or more embodiments of this disclosure.
FIG. 6 is a block diagram of an example computing system capable of implementing and/or being used in connection with one or more of the embodiments described and/or illustrated herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed. Rather, the instant disclosure covers all modifications, equivalents, and alternatives falling within the scope of the appended claims.

### DETAILED DESCRIPTION

The present disclosure describes various systems and methods for load-balancing traffic based on flow attributes and intents. As will be explained in greater detail below, embodiments of the instant disclosure may include and/or represent load-balanced networks that apply different load-balancing techniques to traffic flows that exhibit different attributes and/or intents. By doing so, such embodiments may be able to improve and/or optimize the efficiencies of the load-balanced networks. For example, such embodiments may improve and/or increase the performance of load-balanced networks (e.g., job completion times) and/or the utilization of resources (e.g., link bandwidth) in the load-balanced networks.

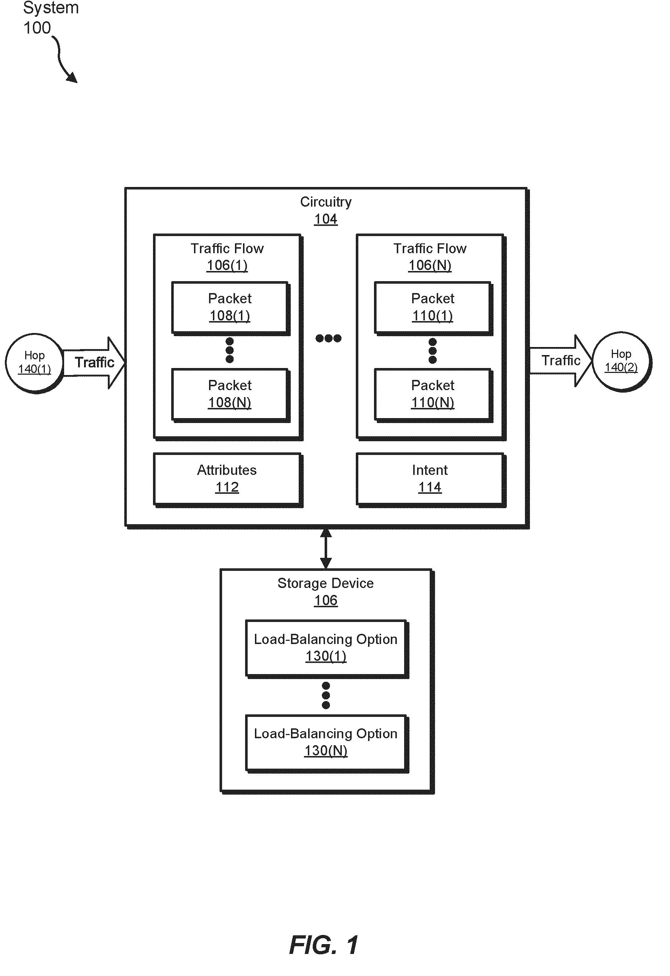

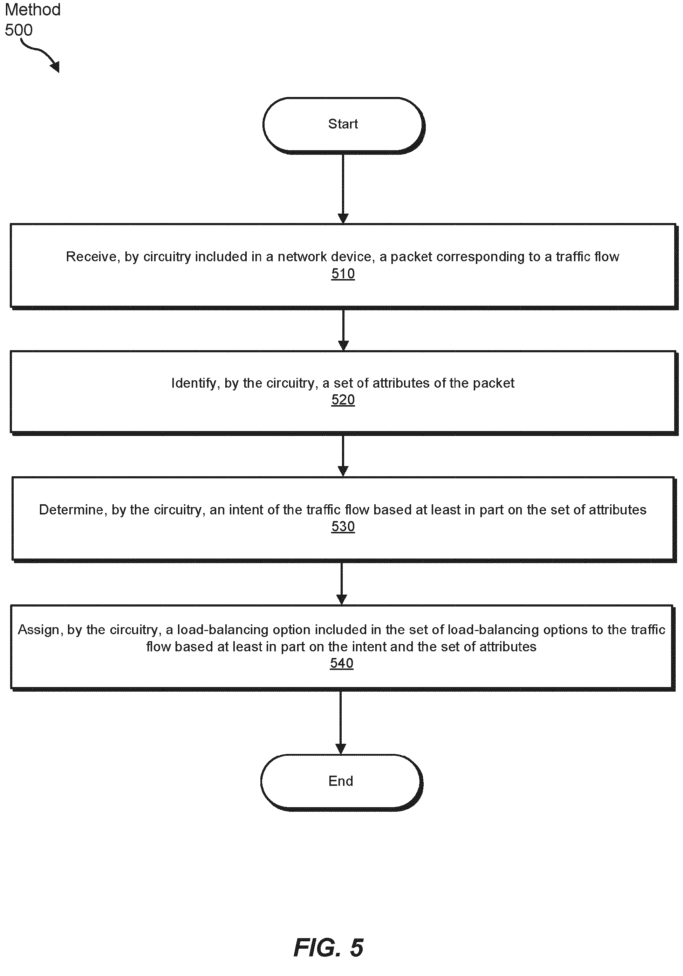

The following will provide, with reference to FIGS. 1-4 and 6, detailed descriptions of example devices, systems, and corresponding implementations for load-balancing traffic based on flow attributes and intents. Detailed descriptions of an example method for load-balancing traffic based on flow attributes and intents will be provided in connection with FIG. 5.

FIG. 1 illustrates an example system 100 capable of load-balancing traffic based on flow attributes and intents. As illustrated in FIG. 1, example system 100 may include and/or represent circuitry 104 and/or a storage device 106. In some examples, circuitry 104 may be communicatively coupled to storage device 106. In one example, circuitry 104 may receive traffic from one or more computing devices and/or hops in a network. For example, circuitry 104 may receive one or more packets 108(1)-(N) corresponding to a traffic flow 106(1) from a hop 140(1) in the network. Additionally or alternatively, circuitry 104 may receive one or more packets 110(1)-(N) corresponding to a traffic flow 106(N). In certain implementations, packets 108(1)-(N) may each include and/or represent a remote direct memory access (RDMA) packet.

In some examples, circuitry 104 may identify one or more attributes 112 of packet 108(1). Examples of attributes 112 include, without limitation, opcodes, bandwidth requirements associated with opcodes, durations associated with opcodes, delay sensitivities associated with opcodes, priority levels, source addresses of source devices, destination addresses of destination devices, combinations or variations of one or more of the same, and/or any other suitable attributes.

In some examples, circuitry 104 may determine an intent 114 of traffic flow 106(1) based at least in part on attributes 112. For example, circuitry 104 may identify an opcode (e.g., an RDMA opcode) corresponding to traffic flow 106(1) within attributes 112 and then determine intent 114 of traffic flow 106(1) based at least in part on the opcode. Examples of such opcodes include, without limitation, read opcodes, write opcodes, send opcodes, receive opcodes, atomic operation opcodes, send-with-immediate opcodes, receive-with-immediate opcodes, combinations or variations of one or more of the same, and/or any other suitable opcodes. In certain implementations, an opcode identified within attributes 112 may correspond to and/or invoke RDMA operations, synchronization of shared state operations, exchanging control messages, and/or exchanging data with immediate signaling.

In some examples, storage device 106 may store and/or maintain data that identifies a set of load-balancing options 130(1)-(N) available for network traffic. In one example, circuitry 104 may assign and/or apply one of load-balancing options 130(1)-(N) to traffic flow 106(1) based at least in part on intent 114 and/or attributes 112. In this example, circuitry 104 may perform load-balancing on all packets corresponding to traffic flow 106(1) by directing all those packets through a certain link in the network or to a certain next hop, such as a hop 140(2) in the network, in accordance with the assigned and/or applied load-balancing option. Additionally or alternatively, circuitry 104 may perform load-balancing on all packets corresponding to traffic flow 106(1) by directing all those packets through across a set of specific links in the network or to a set of specific next hops in accordance with the assigned and/or applied load-balancing option.

In some examples, load-balancing options 130(1)-(N) may include and/or represent various filters and/or techniques for balancing traffic across multiple links from one hop within a path to a subsequent hop within the path. In one example, such a path may include and/or represent one of multiple equal-cost multipaths (ECMPs) established and/or formed within a network and/or across networks. Examples of load-balancing options 130(1)-(N) include, without limitation, static load-balancing modes, per-packet dynamic load-balancing modes, flowlet dynamic load-balancing modes, reactive dynamic load-balancing modes, combinations or variations of one or more of the same, and/or any other suitable load-balancing options.

In some examples, by load-balancing the traffic transmitted from one hop to another via ECMPs, circuitry 104 may substantially improve link and/or path efficiency and/or utilization. Additionally or alternatively, by load-balancing traffic across ECMPs based on attributes of the certain flows, circuitry 104 may prevent any of the links included in the paths from becoming a bottleneck to the traffic.

In some examples, circuitry 104 may include and/or represent one or more electrical and/or electronic circuits capable of processing, applying, modifying, transforming, displaying, transmitting, receiving, and/or executing data for system 100. In one example, circuitry 104 may access and/or analyze data stored in storage device 106 to facilitate and/or support load-balancing traffic based on flow attributes and/or intents. Additionally or alternatively, circuitry 104 may launch, perform, and/or execute certain executable files, code snippets, and/or computer-readable instructions to facilitate and/or support load-balancing traffic based on flow attributes and/or intents.

Although illustrated as a single unit in FIG. 1, circuitry 104 may include and/or represent a collection of multiple processing units and/or electrical or electronic components that work and/or operate in conjunction with one another. In one example, circuitry 104 may include and/or represent one or more application-specific integrated circuits (ASICs). Additionally or alternatively, circuitry 104 may include and/or represent one or more central processing units (CPUs) and/or graphics processing units (GPUs). Examples of circuitry 104 include, without limitation, processing devices, hardware processors, microprocessors, microcontrollers, field-programmable gate arrays (FPGAs), systems on chips (SoCs), parallel accelerated processors, tensor cores, integrated circuits, chiplets, optical modules, receivers, transmitters, transceivers, storage devices, memory devices, logical circuitry, portions of one or more of the same, variations or combinations of one or more of the same, and/or any other suitable circuitry.

In some examples, traffic flows 106(1)-(N) may include and/or represent a set of packets that share certain attributes (e.g., opcodes, priority levels, source addresses, destination addresses, etc.) in common with one another. Flow entries corresponding to traffic flows 106(1)-(N) may be installed and/or stored in a database. In one example, a packet may correspond and/or belong to one of traffic flows 106(1)-(N) if the packet and one of the flow entries share certain attributes and/or match conditions in common. For example, upon encountering a packet within the network, a switch may iterate through a set of flow entries until identifying a flow entry whose match conditions match the attributes of the packet.

Flow entries may include a variety of data and/or information. In one example, a flow entry may include information that indicates how to handle packets of the corresponding traffic flow and/or statistics associated with the traffic flow. For example, a flow entry may include and/or represent control logic that directs a switch to perform at least one action on a certain packet. Additionally or alternatively, the flow entry may also include and/or represent statistics that identify how many packets received by the switch have matched the flow entry.

In some examples, the term "match condition" may refer to and/or represent any type or form of characteristic, attribute, condition, metadata, and/or header information that corresponds to and/or describes a traffic flow. Examples of such match conditions include, without limitation, ingress (or incoming) ports, egress (or outgoing) ports, source addresses, destination addresses, Ethernet types, Virtual Local Area Network (VLAN) identifiers, VLAN priority levels, media access control (MAC) addresses, Internet protocol (IP) addresses, IP protocols, IP Type of Service (ToS) bits, transport source ports, Internet Control Message Protocol (ICMP) types, transport destination ports, ICMP codes, combinations of one or more of the same, or any other suitable match conditions.

In some examples, storage device 106 may include and/or represent any type or form of volatile or non-volatile storage device or medium capable of storing data, computer-readable instructions, and/or load-balancing options. In one example, storage device 106 may maintain and/or store one or more computer-readable instructions, modules, programs, applications, and/or load-balancing options 130(1)-(N). Examples of storage device 106 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, and/or any other suitable memory.

In some examples, intent 114 may refer to and/or represent a selected and/or defined load-balancing preference and/or option for a traffic flow. In one example, an administrator and/or user may select, assign, and/or define one of load-balancing options 130(1)-(N) for use in load-balancing specific types of traffic across at least a portion of one or more ECMPs. For example, the administrator and/or user may enter data into a user interface (e.g., a command-line interface) to define load-balancing option 130(1) for use in load-balancing and/or forwarding packets of a traffic flow having a certain opcode in a specific way. In this example, the administrator and/or user may also enter data into the user interface to define load-balancing option 130(N) for use in load-balancing and/or forwarding packets of another traffic flow having a certain opcode in a specific way.

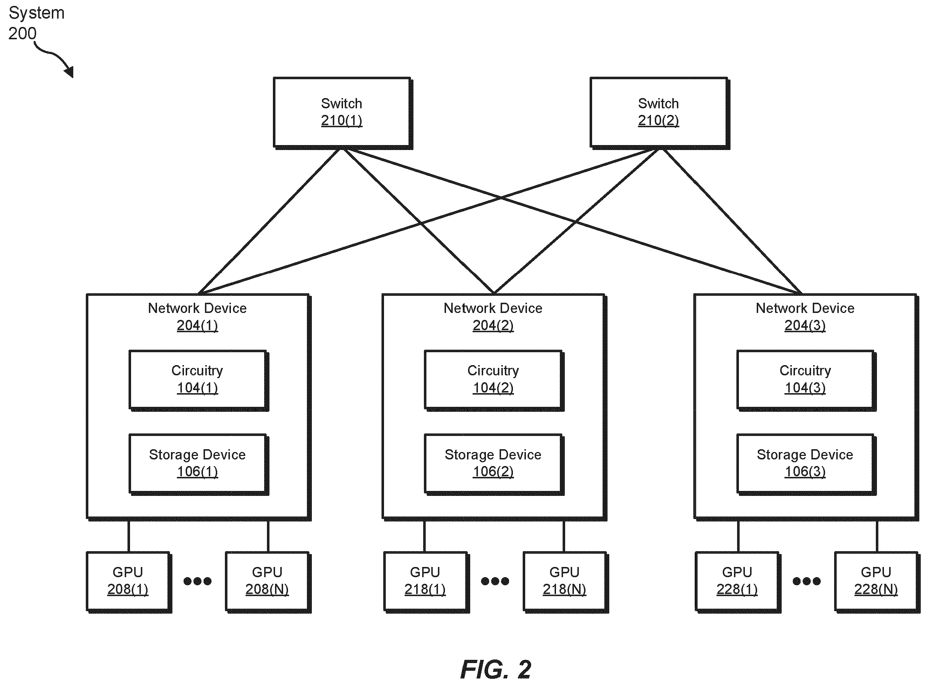

FIG. 2 illustrates an example system 200 that facilitates and/or supports load-balancing traffic based on flow attributes and intents. In some examples, system 200 in FIG. 2 may include and/or involve certain devices, components, configurations, and/or features that perform and/or provide functionalities that are similar and/or identical to those described above in connection with FIG. 1. In one example, system 200 may include and/or represent network device 204(1), network device 204(2), network device 204(3), switch 210(1)-(2), GPUs 208(1)-(N), GPUs 218(1)-(N), and/or GPUs 228(1)-(N). For example, network device 204(1) may be communicatively coupled to switches 210(1)-(2) and/or GPUs 208(1)-(N), and network device 204(2) may be communicatively coupled to switches 210(1)-(2) and/or GPUs 218(1)-(N). Additionally or alternatively, network device 204(3) may be communicatively coupled to switches 210(1)-(2) and/or GPUs 228(1)-(N).

In some examples, network devices 204(1)-(3) may include, incorporate, and/or represent circuitries 104(1)-(3) and storage devices 106(1)-(3), respectively. For example, network device 204(2) may include, incorporate, and/or represent 104(2) and storage device 106(2). In one example, each of network devices 204(1)-(3) may constitute and/or represent an implementation of system 100 in FIG. 1. In certain implementations, network devices 204(1)-(3) may sit and/or reside between GPUs 208(1)-(N), 218(1)-(N), and 228(1)-(N), respectively, and switches 210(1)-(2). In such implementations, switches 210(1)-(2) may constitute and/or represent a set of next hops corresponding to ECMP routes directed toward destinations of certain traffic flows.

Network devices 204(1)-(3) may include and/or represent any type or form of physical computing device capable of reading computer-executable instructions, handling network traffic, and/or performing load-balancing on network traffic. In one example, network devices 204(1)-(3) may each include and/or represent a top-of-rack (TOR) switch. Additional examples of network devices 204(1)-(3) include, without limitation, switches, routers, hubs, modems, bridges, repeaters, gateways (such as Broadband Network Gateways (BNGs)), multiplexers, network adapters, network interfaces, linecards, collectors, client devices, laptops, tablets, desktops, servers, cellular phones, Personal Digital Assistants (PDAs), multimedia players, embedded systems, wearable devices, gaming consoles, portions of one or more of the same, variations or combinations of one or more of the same, and/or any other suitable devices.

In some examples, one or more of network devices 204(1)-(3) may be involved in training an Al model for load-balancing the network traffic across different paths and/or routes to a certain node, hop, and/or device. For example, network device 204(1) may train an Al model for load-balancing the network traffic based at least in part on a portion of the network traffic as exchanged between multiple processing devices, such as GPUs 208(1)-(N), 218(1)-(N), and/or 228(1)-(N). Additionally or alternatively, network device 204(1) and/or the AIML load-balancing and/or routing system or feature may receive, detect, and/or identify one or more packets of traffic flows 106(1)-(N) while training the Al model.

As a specific example, GPUs 208(1) may exchange traffic with GPU 218(1) via network device 204(1), network device 204(2), switch 210(1), and/or switch 210(2). In this example, network devices 204(1) and 204(2) may receive and/or analyze such traffic to train an Al machine learning (AIML) load-balancing and/or routing system or feature. Additionally or alternatively, the AIML load-balancing and/or routing system or feature may take into account the attributes, intents, and/or parameters of the traffic to facilitate and/or support more granular load-balancing decisions for the traffic.

By doing so, the AIML load-balancing and/or routing system or feature may be equipped and/or trained to avoid applying the same ECMP load-balancing to all the traffic flows, which would potentially lead to sub-optimal performance (e.g., job completion times) and/or sub-optimal resource utilization (e.g., link bandwidth). As a result, the AIML load-balancing and/or routing system or feature may be able to apply the optimal load-balancing option and/or technique to each of the different traffic flows. Additionally or alternatively, the AIML load-balancing and/or routing system or feature may take into account different parameters of the traffic flows (e.g., inactivity timers in flowlet dynamic load-balancing mode) within a certain load-balancing option and/or technique.

In some examples, network device 204(1) may implement an AIML load-balancing and/or routing system or feature that applies per-packet dynamic load-balancing to some traffic flows, flowlet dynamic load-balancing to other traffic flows, reactive dynamic load-balancing to additional traffic flows, and/or static load-balancing to further traffic flows. In one example, network device 204(1) may receive traffic from GPU 208(1). In this example, the traffic may be destined for GPU 218(1). Network device 204(1) and/or the AIML load-balancing and/or routing system or feature may ECMP load-balance the traffic through switches 210(1) and 210(2) toward network device 204(2) and/or GPU 218(1). Network device 204(1) and/or the AIML load-balancing and/or routing system or feature may apply different load-balancing options to such traffic according to the different flows involved and/or the different RDMA opcodes included in the respective packets. Accordingly, network device 204(1) and/or the AIML load-balancing and/or routing system or feature may load-balance the traffic by selecting the optimal option and/or parameters within the option for each traffic flow based at least in part on the corresponding attributes, properties, intents, etc.

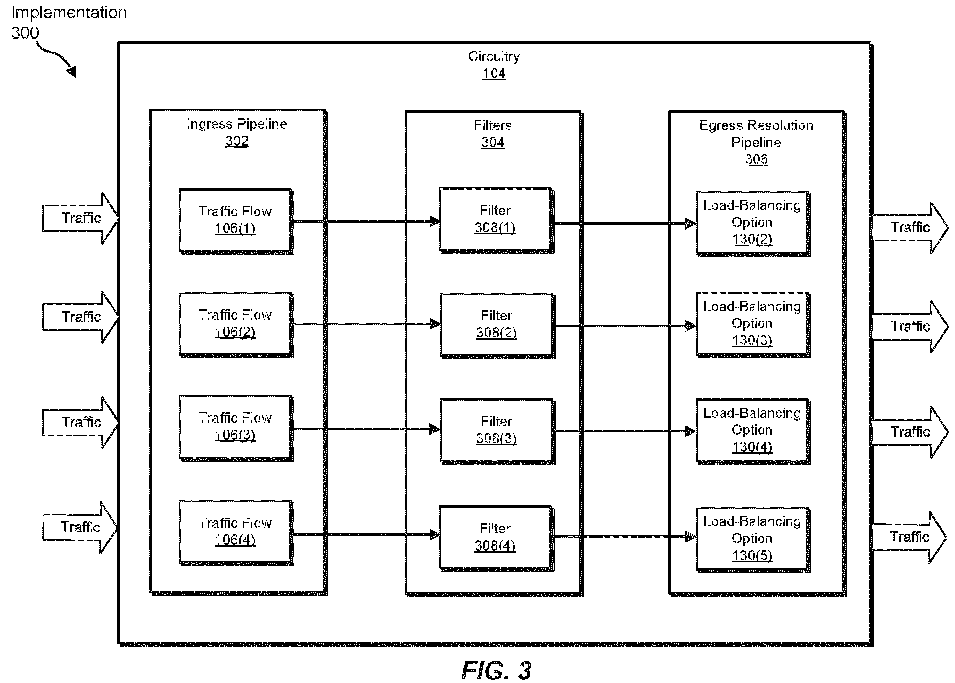

FIG. 3 illustrates an example implementation 300 for load-balancing traffic based on flow attributes and intents. In some examples, implementation 300 may include and/or involve certain components, configurations, and/or features that perform and/or provide functionalities that are similar and/or identical to those described above in connection with either FIG. 1 or FIG. 2. In one example, implementation 300 may include and/or represent circuitry 104, which is configured with an ingress pipeline 302, filters 304, and/or an egress resolution pipeline 306. For example, circuitry 104 may create and/or install filters 308(1), 308(2), 308(3), and 308(4) that each define one or more match conditions corresponding to a certain traffic flow. In this example, the match conditions may differ and/or vary across filters 308(1)-(4).

In some examples, all packets of traffic flow 106(1) may be forwarded using static load-balancing or user-configured load-balancing (e.g., dynamic load-balancing per-packet) by default. In one example, if an administrator intends to apply a specific load-balancing mode to traffic flow 106(1), then the administrator may create and/or define filter 308(1) with one or more actions to be performed on all the packets of traffic flow 106(1) as a specific load-balancing mode and/or profile. In this example, circuitry 104 may install, configure, and/or apply filter 308(1) for traffic flow 106(1) in the forwarding path.

In some examples, traffic flow 106(1) may initially include and/or represent a first ECMP route (e.g., default load-balancing mode). In one example, circuitry 104 may receive a first packet of traffic flow 106(1) and then send a copy of traffic flow 106(1) along with certain metadata to the responsible load-balancing application. In this example, the load-balancing application may clone a second ECMP route (e.g., flowlet dynamic load-balancing mode) from the first ECMP route. The second ECMP route may be configured and/or programmed with the corresponding load-balancing mode and/or profile. Additionally or alternatively, circuitry 104 may configure and/or program filter 308(1) for traffic flow 106(1) with user-defined and/or user-selected match conditions and load-balancing option 130(2) to redirect packets of traffic flow 106(1) from the first ECMP route to the second ECMP route. Accordingly, filter 308(1) may be configured and/or programmed to apply load-balancing option 130(2) to traffic flow 106(1). Afterward, all packets of traffic flow 106(1) may be subjected to filter 308(1) to redirect those packets to the second ECMP route.

In some examples, traffic flow 106(2) may initially include and/or represent the first ECMP route. In one example, circuitry 104 may receive a first packet of traffic flow 106(2) and then send a copy of traffic flow 106(2) along with certain metadata to the responsible load-balancing application. In this example, the load-balancing application may clone a third ECMP route (e.g., reactive dynamic load-balancing mode) from the first ECMP route. The third ECMP route may be configured and/or programmed with the corresponding load-balancing mode and/or profile. Additionally or alternatively, circuitry 104 may configure and/or program filter 308(2) for traffic flow 106(2) with user-defined and/or user-selected match conditions and load-balancing option 130(3) to redirect packets of traffic flow 106(2) from the first ECMP route to the third ECMP route. Accordingly, filter 308(2) may be configured and/or programmed to apply load-balancing option 130(3) to traffic flow 106(2). Afterward, all packets of traffic flow 106(2) may be subjected to filter 308(2) to redirect those packets to the third ECMP route.

In some examples, traffic flow 106(3) may initially include and/or represent the first ECMP route. In one example, circuitry 104 may receive a first packet of traffic flow 106(3) and then send a copy of traffic flow 106(3) along with certain metadata to the responsible load-balancing application. In this example, the load-balancing application may clone a fourth ECMP route (e.g., per-packet dynamic load-balancing mode) from the first ECMP route. The fourth ECMP route may be configured and/or programmed with the corresponding load-balancing mode and/or profile. Additionally or alternatively, circuitry 104 may configure and/or program filter 308(3) for traffic flow 106(3) with user-defined and/or user-selected match conditions and load-balancing option 130(4) to redirect packets of traffic flow 106(3) from the first ECMP route to the fourth ECMP route. Accordingly, filter 308(3) may be configured and/or programmed to apply load-balancing option 130(4) to traffic flow 106(3). Afterward, all packets of traffic flow 106(3) may be subjected to filter 308(3) to redirect those packets to the fourth ECMP route.

In some examples, traffic flow 106(4) may initially include and/or represent the first ECMP route. In one example, circuitry 104 may receive a first packet of traffic flow 106(4) and then send a copy of traffic flow 106(4) along with certain metadata to the responsible load-balancing application. In this example, the load-balancing application may clone a fifth ECMP route (e.g., static load-balancing mode) from the first ECMP route. The fifth ECMP route may be configured and/or programmed with the corresponding load-balancing mode and/or profile. Additionally or alternatively, circuitry 104 may configure and/or program filter 308(4) for traffic flow 106(4) with user-defined and/or user-selected match conditions and load-balancing option 130(5) to redirect packets of traffic flow 106(4) from the first ECMP route to the fifth ECMP route. Accordingly, filter 308(4) may be configured and/or programmed to apply load-balancing option 130(5) to traffic flow 106(4). Afterward, all packets of traffic flow 106(4) may be subjected to filter 308(4) to redirect those packets to the fifth ECMP route.

In some examples, circuitry 104 may identify and/or determine that the attributes of a packet corresponding to traffic flow 106(1) satisfy and/or meet the match conditions defined by filter 308(1). In one example, circuitry 104 may assign and/or apply load-balancing option 130(2) to the packet corresponding to traffic flow 106(1) in response to the attributes satisfying and/or meeting those match conditions.

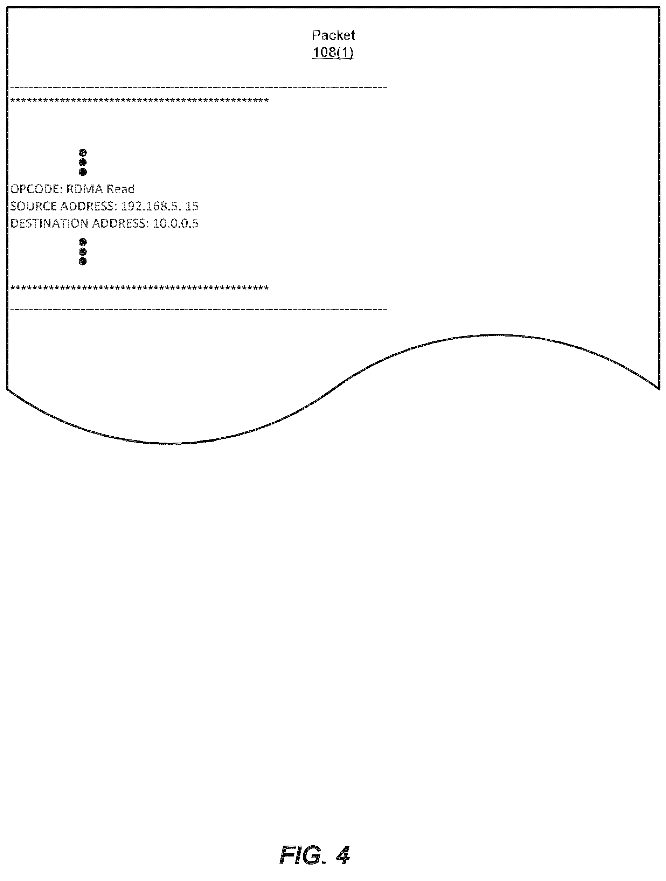

FIG. 4 illustrates an example implementation of packet 108(1) of traffic flow 106(1) for load-balancing traffic based on flow attributes and intents. In some examples, packet 108(1) may include and/or involve certain components, configurations, attributes, and/or features that perform and/or provide functionalities that are similar and/or identical to those described above in connection with any of FIGS. 1-3. In one example, packet 108(1) may include and/or represent attributes 112 of traffic flow 106(1). In this example, attributes 112 may be used to determine the intent of traffic flow 106(1). As illustrated in FIG. 4, packet 108(1) may include, represent, and/or identify an opcode (e.g., "RDMA read"), a source address (e.g., "192.168.5.15"), a destination address (e.g., "10.0.05"), among other attributes of traffic flow 106(1).

In some examples, the systems described in connection with FIGS. 1-3 may include and/or represent one or more additional devices, circuits, components, and/or features that are not necessarily illustrated and/or labeled in FIGS. 1-3. For example, the systems illustrated in FIGS. 1-3 may also include and/or represent additional network devices, computing devices, controllers, routers, switches, analog and/or digital circuitry, onboard logic, transistors, transmitters, receivers, transceivers, antennas, resistors, capacitors, diodes, inductors, switches, registers, flipflops, connections, traces, buses, semiconductor (e.g., silicon) devices and/or structures, processing devices, storage devices, circuit boards, sensors, packages, substrates, housings, combinations or variations of one or more of the same, and/or any other suitable components that facilitate and/or support self-contained reliability testing. In certain implementations, one or more of these additional devices, circuits, components, and/or features may be inserted and/or applied between any of the existing devices, circuits, components, and/or features illustrated in FIGS. 1-3 consistent with the aims and/or objectives described herein. Accordingly, the couplings and/or connections described with reference to FIGS. 1-3 may be direct connections with no intermediate components, devices, and/or nodes or indirect connections with one or more intermediate components, devices, and/or nodes.

In some examples, the phrase "to couple" and/or the term "coupling," as used herein, may refer to a direct connection and/or an indirect connection. For example, a direct coupling between two components may constitute and/or represent a coupling in which those two devices or components are directly connected to each other by a single node that provides continuity from one of those two devices or components to the other. In other words, the direct coupling may exclude and/or omit any additional devices or components between those two devices or components.

Additionally or alternatively, an indirect coupling between two devices and/or components may constitute and/or represent a coupling in which those two devices or components are indirectly connected to each other by multiple nodes that fail to provide direct electrical and/or communicative continuity from one of those two devices or components to the other. In other words, the indirect coupling may include and/or incorporate at least one additional device or component between those two devices or components.

FIG. 5 is a flow diagram of an example method 500 for load-balancing traffic based on flow attributes and intents. In one example, the steps shown in FIG. 5 may be achieved and/or accomplished by circuitry included in a network device (such as a TOR switch). Additionally or alternatively, the steps shown in FIG. 5 may incorporate and/or involve certain sub-steps and/or variations consistent with the descriptions provided above in connection with FIGS. 1-4.

As illustrated in FIG. 5, method 500 may include the step of receiving, by circuitry included in a network device, a packet corresponding to a traffic flow (510). Step 510 may be performed in a variety of ways, including any of those described above in connection with FIGS. 1-4. For example, circuitry included in the network device may receive a packet corresponding to a traffic flow.

Method 500 may also include the step of identifying, by the circuitry, a set of attributes of the packet (520). Step 520 may be performed in a variety of ways, including any of those described above in connection with FIGS. 1-4. For example, the circuitry may identify a set of attributes of the packet.

Method 500 may further include the step of determining, by the circuitry, an intent of the traffic flow based at least in part on the set of attributes (530). Step 530 may be performed in a variety of ways, including any of those described above in connection with FIGS. 1-4. For example, the circuitry may determine an intent of the traffic flow based at least in part on the set of attributes.

Method 500 may further include the step of assigning, by the circuitry, a load-balancing option included in the set of load-balancing options to the traffic flow based at least in part on the intent and the set of attributes (540). Step 540 may be performed in a variety of ways, including any of those described above in connection with FIGS. 1-4. For example, the circuitry may assign a load-balancing option included in the set of load-balancing options to the traffic flow based at least in part on the intent and the set of attributes.

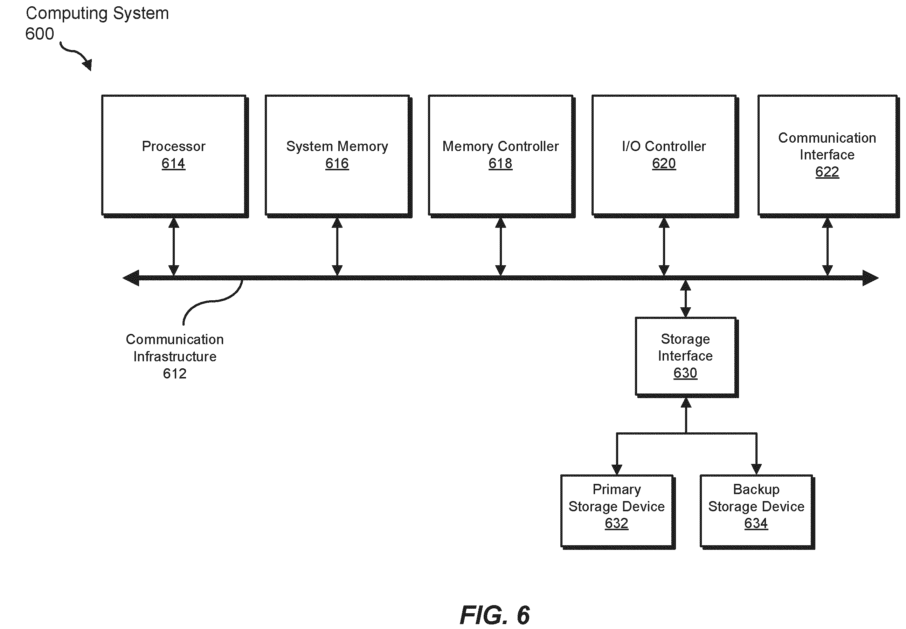

FIG. 6 is a block diagram of an example computing system 600 capable of implementing and/or being used in connection with one or more of the embodiments described and/or illustrated herein. In some embodiments, all or a portion of computing system 600 may perform and/or be a means for performing, either alone or in combination with other elements, one or more of the steps described in connection with FIG. 3. All or a portion of computing system 600 may also perform and/or be a means for performing and/or implementing any other steps, methods, or processes described and/or illustrated herein. In one example, computing system 600 may include and/or store all or a portion of certain software modules.

Computing system 600 broadly represents any type or form of electrical load, including a single or multi-processor computing device or system capable of executing computer-readable instructions. Examples of computing system 600 include, without limitation, workstations, laptops, client-side terminals, servers, distributed computing systems, mobile devices, network switches, network routers (e.g., backbone routers, edge routers, core routers, mobile service routers, broadband routers, etc.), network appliances (e.g., network security appliances, network control appliances, network timing appliances, SSL VPN (Secure Sockets Layer Virtual Private Network) appliances, etc.), network controllers, gateways (e.g., service gateways, mobile packet gateways, multi-access gateways, security gateways, etc.), and/or any other type or form of computing system or device.

Computing system 600 may be programmed, configured, and/or otherwise designed to comply with one or more networking protocols. According to certain embodiments, computing system 600 may be designed to work with protocols of one or more layers of the Open Systems Interconnection (OSI) reference model, such as a physical layer protocol, a link layer protocol, a network layer protocol, a transport layer protocol, a session layer protocol, a presentation layer protocol, and/or an application layer protocol. For example, computing system 600 may include a network device configured according to a Universal Serial Bus (USB) protocol, an Institute of Electrical and Electronics Engineers (IEEE) 1394 protocol, an Ethernet protocol, a T1 protocol, a Synchronous Optical Networking (SONET) protocol, a Synchronous Digital Hierarchy (SDH) protocol, an Integrated Services Digital Network (ISDN) protocol, an Asynchronous Transfer Mode (ATM) protocol, a Point-to-Point Protocol (PPP), a Point-to-Point Protocol over Ethernet (PPPoE), a Point-to-Point Protocol over ATM (PPPoA), a Bluetooth protocol, an IEEE 802.XX protocol, a frame relay protocol, a token ring protocol, a spanning tree protocol, and/or any other suitable protocol.

Computing system 600 may include various network and/or computing components. For example, computing system 600 may include at least one processor 614 and a system memory 616. Processor 614 generally represents any type or form of processing unit capable of processing data or interpreting and executing instructions. For example, processor 614 may represent an application-specific integrated circuit (ASIC), a system on a chip (e.g., a network processor), a hardware accelerator, a general purpose processor, and/or any other suitable processing element.

Processor 614 may process data according to one or more of the networking protocols discussed above. For example, processor 614 may execute or implement a portion of a protocol stack, may process packets, may perform memory operations (e.g., queuing packets for later processing), may execute end-user applications, and/or may perform any other processing tasks.

System memory 616 generally represents any type or form of volatile or non-volatile storage device or medium capable of storing data and/or other computer-readable instructions. Examples of system memory 616 include, without limitation, Random Access Memory (RAM), Read Only Memory (ROM), flash memory, or any other suitable memory device. Although not required, in certain embodiments computing system 600 may include both a volatile memory unit (such as, for example, system memory 616) and a non-volatile storage device (such as, for example, primary storage device 632, as described in detail below). System memory 616 may be implemented as shared memory and/or distributed memory in a network device. Furthermore, system memory 616 may store packets and/or other information used in networking operations.

In certain embodiments, example computing system 600 may also include one or more components or elements in addition to processor 614 and system memory 616. For example, as illustrated in FIG. 6, computing system 600 may include a memory controller 618, an Input/Output (I/O) controller 620, and a communication interface 622, each of which may be interconnected via communication infrastructure 612. Communication infrastructure 612 generally represents any type or form of infrastructure capable of facilitating communication between one or more components of a computing device. Examples of communication infrastructure 612 include, without limitation, a communication bus (such as a Serial ATA (SATA), an Industry Standard Architecture (ISA), a Peripheral Component Interconnect (PCI), a PCI Express (PCIe), and/or any other suitable bus), and a network.

Memory controller 618 generally represents any type or form of device capable of handling memory or data or controlling communication between one or more components of computing system 600. For example, in certain embodiments memory controller 618 may control communication between processor 614, system memory 616, and I/O controller 620 via communication infrastructure 612. In some embodiments, memory controller 618 may include a Direct Memory Access (DMA) unit that may transfer data (e.g., packets) to or from a link adapter.

I/O controller 620 generally represents any type or form of device or module capable of coordinating and/or controlling the input and output functions of a computing device. For example, in certain embodiments I/O controller 620 may control or facilitate transfer of data between one or more elements of computing system 600, such as processor 614, system memory 616, communication interface 622, and storage interface 630.

Communication interface 622 broadly represents any type or form of communication device or adapter capable of facilitating communication between example computing system 600 and one or more additional devices. For example, in certain embodiments communication interface 622 may facilitate communication between computing system 600 and a private or public network including additional computing systems. Examples of communication interface 622 include, without limitation, a link adapter, a wired network interface (such as a network interface card), a wireless network interface (such as a wireless network interface card), and any other suitable interface. In at least one embodiment, communication interface 622 may provide a direct connection to a remote server via a direct link to a network, such as the Internet. Communication interface 622 may also indirectly provide such a connection through, for example, a local area network (such as an Ethernet network), a personal area network, a wide area network, a private network (e.g., a virtual private network), a telephone or cable network, a cellular telephone connection, a satellite data connection, or any other suitable connection.

In certain embodiments, communication interface 622 may also represent a host adapter configured to facilitate communication between computing system 600 and one or more additional network or storage devices via an external bus or communications channel. Examples of host adapters include, without limitation, Small Computer System Interface (SCSI) host adapters, Universal Serial Bus (USB) host adapters, IEEE 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 622 may also enable computing system 600 to engage in distributed or remote computing. For example, communication interface 622 may receive instructions from a remote device or send instructions to a remote device for execution.

As illustrated in FIG. 6, example computing system 600 may also include a primary storage device 632 and/or a backup storage device 634 coupled to communication infrastructure 612 via a storage interface 630. Storage devices 632 and 634 generally represent any type or form of storage device or medium capable of storing data and/or other computer-readable instructions. For example, storage devices 632 and 634 may represent a magnetic disk drive (e.g., a so-called hard drive), a solid state drive, a floppy disk drive, a magnetic tape drive, an optical disk drive, a flash drive, or the like. Storage interface 630 generally represents any type or form of interface or device for transferring data between storage devices 632 and 634 and other components of computing system 600.

In certain embodiments, storage devices 632 and 634 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 632 and 634 may also include other similar structures or devices for allowing computer software, data, or other computer-readable instructions to be loaded into computing system 600. For example, storage devices 632 and 634 may be configured to read and write software, data, or other computer-readable information. Storage devices 632 and 634 may be a part of computing system 600 or may be separate devices accessed through other interface systems.

Many other devices or subsystems may be connected to computing system 600. Conversely, all of the components and devices illustrated in FIG. 6 need not be present to practice the embodiments described and/or illustrated herein. The devices and subsystems referenced above may also be interconnected in different ways from those shown in FIG. 6. Computing system 600 may also employ any number of software, firmware, and/or hardware configurations. For example, one or more of the example embodiments disclosed herein may be encoded as a computer program (also referred to as computer software, software applications, computer-readable instructions, or computer control logic) on a computer-readable medium. The term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives and floppy disks), optical-storage media (e.g., Compact Disks (CDs) and Digital Video Disks (DVDs)), electronic-storage media (e.g., solid-state drives and flash media), and other distribution systems.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered as being by way of example in nature since many other architectures can be implemented to achieve the same functionality.

In some examples, all or a portion of system 100 in FIG. 1 may represent portions of a cloud-computing or network-based environment. Cloud-computing and network-based environments may provide various services and applications via the Internet. These cloud-computing and network-based services (e.g., software as a service, platform as a service, infrastructure as a service, etc.) may be accessible through a web browser or other remote interface. Various functions described herein may also provide network switching capabilities, gateway access capabilities, network security functions, content caching and delivery services for a network, network control services, and/or and other networking functionality.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

Therefore, from one perspective, there has been described a system for load-balancing traffic based on flow attributes and intents may include at least one storage device and/or circuitry. In this example, the storage device may be configured to store data that identifies a set of load-balancing options available for network traffic. Additionally or alternatively, the circuitry may be configured to (1) identify a set of attributes of a packet corresponding to a traffic flow, (2) determine, based at least in part on the set of attributes, an intent of the traffic flow, and (3) assign a load-balancing option included in the set of load-balancing options to the traffic flow based at least in part on the intent and the set of attributes. Various other devices, systems, and methods are also disclosed.

Further examples of feature combinations taught by the present disclosure are set out in the following numbered clauses.

Clause 1. A system comprising: at least one storage device configured to store data that identifies a set of load-balancing options available for network traffic; and circuitry configured to: identify a set of attributes of a packet corresponding to a traffic flow; determine, based at least in part on the set of attributes, an intent of the traffic flow; and assign a load-balancing option included in the set of load-balancing options to the traffic flow based at least in part on the intent and the set of attributes.

Clause 2. The system of clause 1, wherein the circuitry is further configured to: identify an additional set of attributes of an additional packet corresponding to an additional traffic flow; determine, based at least in part on the additional set of attributes, an additional intent of the additional traffic flow; and assign an additional load-balancing option included in the set of load-balancing options to the additional traffic flow based at least in part on the additional intent and the additional set of attributes.

Clause 3. The system of clause 1 or 2, wherein the circuitry is further configured to: identify, within the set of attributes, an opcode corresponding to the traffic flow; and determine the intent of the traffic flow based at least in part on the opcode.

Clause 4. The system of clause 1, 2 or 3, wherein the circuitry is further configured to perform load-balancing on all packets corresponding to the traffic flow by directing all the packets corresponding to the traffic flow through a certain link or to a certain next hop in accordance with the load-balancing option.

Clause 5. The system of any preceding clause, wherein the circuitry is further configured to: create a first filter that defines one or more match conditions corresponding to the traffic flow; and create a second filter that defines one or more additional match conditions corresponding to an additional traffic flow.

Clause 6. The system of clause 5, wherein the circuitry is further configured to: determine that the set of attributes satisfy the match conditions defined by the first filter; and assign the load-balancing option to the traffic flow in response to the set of attributes satisfying the match conditions.

Clause 7. The system of clause 5 or 6, wherein the circuitry is further configured to: configure the first filter to apply the load-balancing option to the traffic flow; and configure the second filter to apply an additional load-balancing option included in the set of load-balancing options to the additional traffic flow.

Clause 8. The system of clause 7, wherein the circuitry is further configured to create the filter based at least in part on data entered by an administrator into a user interface.

Clause 9. The system of any preceding clause, wherein the circuitry is further configured to: train an artificial intelligence (AI) model for load-balancing the network traffic based at least in part on at least a portion of the network traffic exchanged between a plurality of processing devices; and detect the packet corresponding to the traffic flow while training the Al model.

Clause 10. The system of clause 9, wherein the plurality of processing devices comprise a first graphical processing unit (GPU) and a second GPU.

Clause 11. The system of any preceding clause, wherein the circuitry comprises a top of rack (TOR) switch that resides between at least one GPU and a set of available next hops corresponding to an equal cost multipath (ECMP) route directed toward a destination of the traffic flow.

Clause 12. The system of any preceding clause, wherein the set of load-balancing options comprises at least one of: a static load-balancing mode; a per-packet dynamic load-balancing mode; a flowlet dynamic load-balancing mode; or a reactive dynamic load-balancing mode.

Clause 13. A method comprising: receiving, by circuitry included in a network device, a packet corresponding to a traffic flow; identifying, by the circuitry, a set of attributes of the packet; determining, by the circuitry, an intent of the traffic flow based at least in part on the set of attributes; and assigning, by the circuitry, a load-balancing option included in the set of load-balancing options to the traffic flow based at least in part on the intent and the set of attributes.

Clause 14. The method of clause 13, further comprising: identifying, by the circuitry, an additional set of attributes of an additional packet corresponding to an additional traffic flow; determining, by the circuitry, an additional intent of the additional traffic flow based at least in part on the additional set of attributes; and assigning, by the circuitry, an additional load-balancing option included in the set of load-balancing options to the additional traffic flow based at least in part on the additional intent and the additional set of attributes.

Clause 15. The method of clause 13 or 14, wherein determining the intent of the traffic flow comprises: identifying, within the set of attributes, an opcode corresponding to the traffic flow; and determining the intent of the traffic flow based at least in part on the opcode.

Clause 16. The method of clause 13, 14 or 15, further comprising performing load-balancing on all packets corresponding to the traffic flow by directing all the packets corresponding to the traffic flow through a certain link or to a certain next hop in accordance with the load-balancing option.

Clause 17. The method of any of clauses 13 to 16, further comprising: creating a first filter that defines one or more match conditions corresponding to the traffic flow; and creating a second filter that defines one or more additional match conditions corresponding to an additional traffic flow.

Clause 18. The method of clause 17, wherein the circuitry is further configured to: determine that the set of attributes satisfy the match conditions defined by the first filter; and assign the load-balancing option to the traffic flow in response to the set of attributes satisfying the match conditions.

Clause 19. The method of clause 17 or 18, wherein the circuitry is further configured to: configuring the first filter to apply the load-balancing option to the traffic flow; and configuring the second filter to apply an additional load-balancing option included in the set of load-balancing options to the additional traffic flow.

Clause 20. A computer-readable medium comprising one or more computer-executable instructions that, when executed by at least one hardware processor of a computing device, cause the hardware processor to: receive a packet corresponding to a traffic flow; identify a set of attributes of a packet corresponding to a traffic flow; determine an intent of the traffic flow based at least in part on the set of attributes; and assign a load-balancing option included in the set of load-balancing options to the traffic flow based at least in part on the intent and the set of attributes.

## Claims

1. A system comprising:
at least one storage device configured to store data that identifies a set of load-balancing options available for network traffic; and
circuitry configured to:
identify a set of attributes of a packet corresponding to a traffic flow;
determine, based at least in part on the set of attributes, an intent of the traffic flow; and
assign a load-balancing option included in the set of load-balancing options to the traffic flow based at least in part on the intent and the set of attributes.

2. The system of claim 1, wherein the circuitry is further configured to:
identify an additional set of attributes of an additional packet corresponding to an additional traffic flow;
determine, based at least in part on the additional set of attributes, an additional intent of the additional traffic flow; and
assign an additional load-balancing option included in the set of load-balancing options to the additional traffic flow based at least in part on the additional intent and the additional set of attributes.

3. The system of claim 1 or 2, wherein the circuitry is further configured to:
identify, within the set of attributes, an opcode corresponding to the traffic flow; and
determine the intent of the traffic flow based at least in part on the opcode.

4. The system of claim 1, 2 or 3, wherein the circuitry is further configured to perform load-balancing on all packets corresponding to the traffic flow by directing all the packets corresponding to the traffic flow through a certain link or to a certain next hop in accordance with the load-balancing option.

5. The system of any preceding claim, wherein the circuitry is further configured to:
create a first filter that defines one or more match conditions corresponding to the traffic flow; and
create a second filter that defines one or more additional match conditions corresponding to an additional traffic flow.

6. The system of claim 5, wherein the circuitry is further configured to:
determine that the set of attributes satisfy the match conditions defined by the first filter; and
assign the load-balancing option to the traffic flow in response to the set of attributes satisfying the match conditions.

7. The system of claim 5 or 6, wherein the circuitry is further configured to:
configure the first filter to apply the load-balancing option to the traffic flow; and
configure the second filter to apply an additional load-balancing option included in the set of load-balancing options to the additional traffic flow.

8. The system of claim 7, wherein the circuitry is further configured to create the filter based at least in part on data entered by an administrator into a user interface.

9. The system of any preceding claim, wherein the circuitry is further configured to:
train an artificial intelligence (AI) model for load-balancing the network traffic based at least in part on at least a portion of the network traffic exchanged between a plurality of processing devices; and
detect the packet corresponding to the traffic flow while training the Al model.

10. The system of claim 9, wherein the plurality of processing devices comprise a first graphical processing unit (GPU) and a second GPU.

11. The system of any preceding claim, wherein the circuitry comprises a top of rack (TOR) switch that resides between at least one GPU and a set of available next hops corresponding to an equal cost multipath (ECMP) route directed toward a destination of the traffic flow.

12. The system of any preceding claim, wherein the set of load-balancing options comprises at least one of:
a static load-balancing mode;
a per-packet dynamic load-balancing mode;
a flowlet dynamic load-balancing mode; or
a reactive dynamic load-balancing mode.

13. A method comprising:
receiving, by circuitry included in a network device, a packet corresponding to a traffic flow;
identifying, by the circuitry, a set of attributes of the packet;
determining, by the circuitry, an intent of the traffic flow based at least in part on the set of attributes; and
assigning, by the circuitry, a load-balancing option included in the set of load-balancing options to the traffic flow based at least in part on the intent and the set of attributes.

14. The method of claim 13, further comprising:
identifying, by the circuitry, an additional set of attributes of an additional packet corresponding to an additional traffic flow;
determining, by the circuitry, an additional intent of the additional traffic flow based at least in part on the additional set of attributes; and
assigning, by the circuitry, an additional load-balancing option included in the set of load-balancing options to the additional traffic flow based at least in part on the additional intent and the additional set of attributes.

15. A computer-readable medium comprising one or more computer-executable instructions that, when executed by at least one hardware processor of a computing device, cause the hardware processor to:
receive a packet corresponding to a traffic flow;
identify a set of attributes of a packet corresponding to a traffic flow;
determine an intent of the traffic flow based at least in part on the set of attributes; and assign a load-balancing option included in the set of load-balancing options to the traffic flow based at least in part on the intent and the set of attributes.
